Europäisches Patentamt

European Patent Office

Office européen des brevets

(11) Publication number: **0 278 721**
A2

## EUROPEAN PATENT APPLICATION

(21) Application number: 88301050.6

(22) Date of filing: 09.02.88

(51) Int. Cl.⁴: **G 02 F 1/133**

(30) Priority: 13.02.87 GB 8703306

(43) Date of publication of application:
17.08.88 Bulletin 88/33

(84) Designated Contracting States:
AT BE CH DE ES FR GB GR IT LI LU NL SE

(71) Applicant: IMPERIAL CHEMICAL INDUSTRIES PLC
Imperial Chemical House Millbank
London SW1P 3JF (GB)

(72) Inventor: Abbott, Steven John
17 Fairview Road Timperley
Altrincham Cheshire WA15 7AR (GB)

Gemmell, Peter Alan
2 Siverdale Close
Frodsham Cheshire (GB)

(74) Representative: Hall, David Brian et al
Imperial Chemical Industries PLC Legal Department:
Patents Po Box 6 Bessemer Road
Welwyn Garden City Herts, AL7 1HD (GB)

(54) Electro-optical devices and methods for making them.

(57) An electro-optical device comprises an electrically responsive liquid crystal material contained between two walls which are bonded together in selected areas and have surface profiles which mutually cooperate to provide between them a multiplicity of microcells, with each such microcell holding a portion of the liquid crystal layer. The walls each have an electrically conductive layer positioned adjacent to at least a plurality of the microcells and separated from that of the other wall by electrically insulating material.

## Description

### ELECTRO-OPTICAL DEVICES AND METHODS FOR MAKING THEM

The invention relates to liquid crystal devices for use inter alia in displays, and in particular to large area electro-optical devices and methods for making them.

Various devices including displays can be obtained by containing a thin layer of liquid crystal material in a closed cell, at least one wall of which is made transparent when used in visual applications. Different effects can be achieved by selecting an appropriate type of liquid crystal material or mixture, i.e. nematic, smectic, or cholesteric, depending on the intended use. Two principal uses of such devices are as the functional features in thermochromic and electro-optical displays.

Thermochromic displays use the selective reflection of cholesteric liquid crystal materials, the observed colour being dependent on the pitch of the cholesteric liquid crystal, this in turn being temperature dependent.

In electro-optical devices, a layer of electrically responsive liquid crystal material which is sensitive to electrical fields (e.g. material having positive or negative dielectric anisotropy) is held between two electrodes, changes in the electrical field produced when a different electrical potential is applied across the electrodes serving to change the orientations of the liquid crystals, e.g. between cholesteric and nematic phases. The observed effect may, for example, be a change between a transparent and an opaque state, the opacity being due to scattering of the light by the liquid crystal or to absorption of the light by a pleochroic dye added to the liquid crystal composition and orientated by its associated liquid crystal according to the applied field.

Typically (but not exclusively) the liquid crystal layer is only 3 to 100 μm thick, and is enclosed between two glass plates sealed around their edges to form a cell, although more flexible materials such as plastics sheets have been proposed for some displays. However, variation in thickness of the liquid crystal layer from one part of a display to another can be very noticeable, and hence is generally undesirable. This seriously limits the size of such displays, especially where flexible plastic sheets are used to form the liquid crystal containing cell.

Larger displays of thermochromic liquid crystal materials have been disclosed in GB 2143323 A. These comprise a layer of short pitch cholesteric liquid crystal material contained between two walls, one of which is surface profiled in the configuration of a coarse grating, and is bonded to the surface of the other wall to form a plurality of closed microcells which divide the liquid crystal layer into a plurality of small discrete portions. Each microcell is thus small enough to be self supporting, and hence the difficulties in maintaining a substantially constant thickness of liquid crystal layer throughout the display, previously experienced in practice with large area displays, need no longer arise.

The specification described the manufacture of thermochromic displays in which the walls were formed from 'Melinex' 301 (a biaxially oriented polyester film having an amorphous coating on one surface. 'Melinex' is a Registered Trade Mark of Imperial Chemical Industries PLC). The amorphous layer was embossed by pressing the surface with an etched roller or plate at pressures typically 3-5 atmos. Such embossing techniques would not be directly applicable to electro-optical devices as the latter have electrodes which are normally in contact with the liquid crystal material.

According to one aspect of the present invention, an electro-optical device comprises an electrically responsive liquid crystal material contained between two walls which are bonded together in selected areas and have surface profiles which mutually cooperate to provide between them a multiplicity of microcells, at least one of the profiles having raised portions which provide the selected bonding areas and define the microcells, each microcell holding a portion of the liquid crystal layer, the walls each having an electrically conductive layer positioned adjacent to at least a plurality of the microcells and separated from that of the other wall by electrically insulating material, with means to connect the conductive layers to a source of electrical potential thereby to enable an electrical field to be applied across the adjacent microcells.

The electrodes may extend over the whole area of the device as a single electrode, e.g. to provide a device suitable for use as an optical shutter, or selected areas of the electrode may be separately operable to provide alpha numeric or other switchable displays having a plurality of microcells per pixel.

Whether switchable between two states or infinitely variable therebetween, the device is preferably used with a source of electrical potential variable from zero to a finite value, thereby to maximise the contrast between the two states, but the present device can also be used with a source of electrical potential varying from one finite value to another, neither being zero.

According to a further aspect of the present invention, a method for manufacturing an opto-electrical device comprises bringing together two laminar sheets either side of a layer of electrically responsive liquid crystal material the sheets each having a layer of electrically conductive coating and surface profiles which mutually cooperate to provide between them a multiplicity of microcells, each holding a portion of the liquid crystal layer, bonding together the two profiled surfaces in areas between and defining the microcells while maintaining or providing a layer of electrical insulation between the electrically conductive coatings in those bonded areas, at least some of the electrically conductive coatings being adjacent to at least some of the microcells thus formed, and exposing portions of the two conductive coatings to enable them to be connected to a source of electrical potential for providing an electrical field across the microcells formed therebetween.

Preferably the microcells are closed cells, thereby isolating the liquid crystal material contained in them as discrete portions isolated from the portions in adjacent microcells. Such microcells can be formed by bonding together two sheets one of which has a flat surface and the other a surface having therein a plurality of depressions, whereby the parts of the surface around the depressions become bonded to the flat surface while the depressions form the microcells.

It is usual in electro-optical devices for the electrodes to be provided in contact with the liquid crystal material. Any insulating material interposed between them causes the internal resistance to be raised, and hence such devices require higher operating voltages. However, provision of a conductive coating overlying the relieved surfaces in the present device would require the provision of added insulating layers between them throughout all the bonded areas.

To avoid this problem, we have devised a new and preferred structure wherein at least one of the laminar sheets, having a relieved surface, comprises a laminar structure in which the electrically conductive coating is an intermediate layer.

A preferred structure of this kind comprises a substrate layer supporting an electrically conductive coating as a second layer, and has in contact with the liquid crystal material a third layer of uneven thickness being profiled to define the microcells.

Thus the conducting layer can be made essentially flat, and so give a much more uniform field. A further advantage is that the supporting layer can be as thick as is necessary to provide any required degree of support, without increasing the electrical resistance of the cell. The thickness of any third layer in the areas between the electrically conducting layer and the liquid crystal material is preferably as thin as possible to minimise the internal resistance, and can even be zero in such areas with advantage.

When using such a laminate with an intermediate conducting layer, the relieved surface profile can be formed by embossing that third layer, e.g. in the manner described for the amorphous layers in the prior art thermochromic devices described above. Where appropriate materials can be used for the laminate, hot die pressing, in which the surface is softened by a heated die shaped to provide an array of depressions or other surface profile, can be used to form microcells having a more even depth across their width. This method is most applicable to laminated sheets of which the layer being embossed has the lower softening temperature, otherwise stringent cooling of the lower softening layers will be desirable. Cold stamping techniques can also be used.

Alternatives to such hot or cold stamping, include etching an originally uniform third layer to provide the required surface profile. Etching of the third layer while it is in situ on the coated substrate, enables the substrate to provide mechanical support for the more delicate structure having so many holes or depressions, but this is at the risk of damaging the electrically conductive coating. Alternately, the third layer can be preformed as a lattice structure, then sandwiched between two planar sheets to form the microcells. Photolithographic techniques can be used for forming the microcell-defining surface structure.

Since the third layer is in constant contact with the liquid crystal material, it is desirable that it should not dissolve in the liquid crystal ( often a powerful solvent), or otherwise react with it. Examples of generally suitable materials include the polyimides which have previously been described for lining conventional liquid crystal cells. These can be applied to the coated substrate by spinning or spraying techniques, and can be embossed, etched or preformed to provide the microcell-defining structure.

Various known bonding methods can be used, although some common adhesives, such as some epoxy materials, can interfere with adjacent liquid crystal materials and give edge effects. While these may have caused few problems in large cells, the effect can be more significant in microcells, due to the much greater perimeter/cell area ratio, although such effects need not preclude all adhesive materials. In general hot melt adhesives with moderately low activation temperatures, are less detrimental than chemically activated (e.g. two pot) adhesives. Preferred methods are welding of the materials lining the microcells, such as the polyimides referred to above .

Choice of electrode materials is not critical to the purposes of this invention, provided they are able to withstand the temperatures and/or pressures or other stresses applied during formation of the surface profile or bonding processes. Most transparent conductor and semiconductor materials can thus be used on appropriate substrates, including the transparent indium tin oxide coatings commonly used in large displays.

An example of a laminated film which we had previously fabricated and which could be used to prepare a device as described above, consists of a layer of 75 μm thick 'Melinex' WO film, having on one side an antireflection coating, and on the other a transparent conducting layer of sputter-coated indium tin oxide, covered with a 10 μm layer of polyethylene. The polyethylene can readily be embossed with deep depressions, and when bonded onto the polyethylene layer of an unembossed sample of the same film, provides an example of the type of structure described above. However, polyethylene is attacked on prolonged exposure to some liquid crystal materials, and so may not be the most appropriate material in all cases. Selection in each case thus requires consideration of the liquid crystal material being used, laminated films available and the embossing and bonding techniques which are suitable for use with those laminated films.

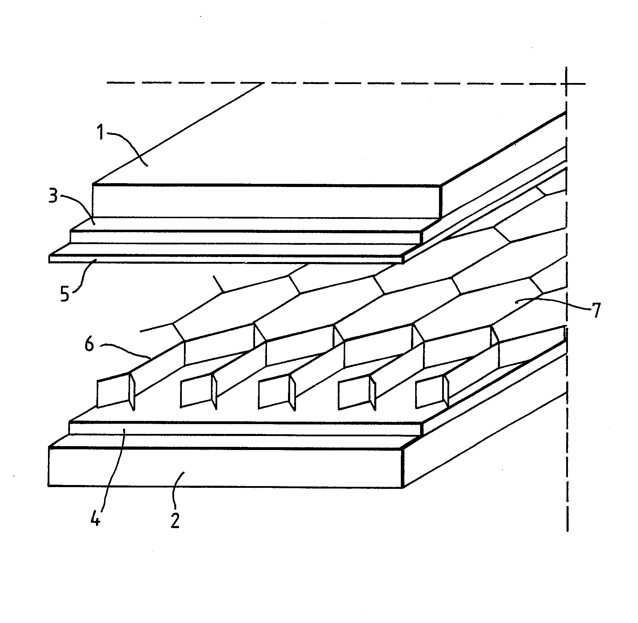

The invention is further illustrated by another embodiment shown in the accompanying drawing, which is an exploded view of a very small portion (shown much enlarged) cut from a much larger sheet, e.g. with a pair of scissors. The various layers have been shown cut back to illustrate the structure more readily.

The portion consists essentially of two sheets of 'Melinex' film 1,2 coated with indium tin oxide 3,4. The upper sheet also has a very thin coating 5 of polyimide. Between the two sheets is a polyimide net-like structure 6, bonded to the lower sheet, the holes through the net being regular hexagons in shape, typically 50-500 μm across. This net-like structure provides the profiled surface defining the microcells, in which is held the liquid crystal material 7, retained in the finished article by the upper sheet, with the two polyimide layers welded together. The drawing is somewhat diagrammmatic, and it should be noted that the thickness of the net-like structure forming the microcells should be sufficiently broad to form a strong bond to the upper sheet.

Other layers can also be present, e.g. protective coatings on the outer surfaces, subbing layers, reflective layers or polarising layers. Depending on how the profiled polyimide structure is formed, it may have a very thin layer at the base of each microcell overlying the indium tin oxide electrode, but this is preferably avoided in order to minimise the electrical resistance of the microcells. Likewise, the other polyimide layer 5 is preferably minimised. The profile can have other configurations, e.g. squares. The minimum size of the microcells is limited by the techniques used to form them, photolithographic techniques being capable of producing smaller sizes than embossing, for example, and also by any edge effect in the liquid crystal material, e.g. when using epoxy adhesive for bonding them together. The maximum size is governed by the physical characteristics of the supporting substrate sheets, e.g. their stiffness and hardness.

**Claims**

1. An electro-optical device comprising an electrically responsive liquid crystal material contained between two walls which are bonded together in selected areas and have surface profiles which mutually cooperate to provide between them a multiplicity of microcells, at least one of the profiles having raised portions which provide the selected bonding areas and define the microcells, each cell holding a portion of the liquid crystal layer, the walls each having an electrically conductive layer positioned adjacent to at least a plurality of the microcells and separated from the conductive layer of the other wall by electrically insulating material, with means to connect the conductive layers to a source of electrical potential thereby to enable an electrical field to be applied across the adjacent microcells.

2. A device as claimed in claim 1 in which the microcells are closed cells, thereby isolating the liquid crystal material contained in them as discrete portions isolated from the portions in adjacent microcells.

3. A device as claimed in claim 1 or claim 2 in which at least one of the electrodes is in contact with the liquid crystal material.

4. A device as claimed in any one of the preceding claims consisting essentially of two laminar sheets bonded together to form the liquid crystal-containing microcells, at least of one of the sheets comprising a substrate layer supporting an electrically conductive coating as a second layer, and having in contnct with the liquid crystal material a third layer of uneven thickness being profiled to define the microcells.

5. A method for manufacturing an opto-electrical device comprising bringing together two laminar sheets either side of a layer of electrically responsive liquid crystal material, the sheets each having an electrically conductive coating and surface profiles which mutually cooperate to provide between them a multiplicity of microcells, each holding a portion of the liquid crystal layer, bonding together the two profiled surfaces in areas between and defining the microcells while maintaining or providing a layer of electrical insulation between the electrically conductive coatings in those bonded areas, at least some of the electrically conductive coatings being adjacent to at least some of the microcells thus formed, and exposing portions of the two conductive coatings to enable them to be connected to a source of electrical potential for providing an electrical field across the microcells formed therebetween.

6. A method as claimed in claim 5 which comprises forming the microcells by bonding together two sheets one of which has a flat surface and the other a surface having therein a plurality of depressions, whereby the parts of the surface around the depressions become bonded to the flat surface while the depressions form the microcells.

7. A method as claimed in claim 6 in which the depressions are formed by etching an initially flat surface of said other sheet.

8. A method as claimed in any one of claims 5 to 7, in which the microcell-defining surface structure is formed by photolithography.

9. A method as claimed in any one of claims 5 to 8 which comprises in situ forming of the microcell-defining surface structure in a surface of one of the sheets prior to bonding together of the two sheets.

10. A method as claimed in any one of claims 5 to 8 which comprises preforming a net-like lattice structure and bonding this to one of the sheets thereby to provide the microcell-defining surface structure of that sheet.

11. A method as claimed in any one of claims 5-10, in which the two sheets are bonded together by welding the two microcell-defining surfaces where their surface profiles bring them into contact with each other.

0278721

14·03·88